# EUROPEAN PATENT APPLICATION

(11) **EP 1 698 972 A2**
(43) Date of publication of application: **06.09.2006**
(21) Application number: 06250154.9
(22) Date of filing: 13.01.2006
(51) Int. Cl.: G06F 9/38

(54) **Processor and information processing method**

(30) Priority: 01.03.2005 JP 2005055423
(71) Applicant: SEIKO EPSON CORPORATION, Shinjuku-ku, Tokyo 163-0811 (JP)
(72) Inventor: Tamura, Akihiko, Suwa-shi Nagano-ken 392-8502 (JP); Tanaka,Katsuya, Suwa-shi Nagano-ken 392-8502 (JP)
(74) Representative: Cloughley, Peter Andrew

(57) **Abstract**

A multiprocessor is provided that efficiently processes high priority processing. A mobile telephone 1 comprises a CPU 10 having therein an external interrupt control section 11 that causes a unit processor that is not executing a task or the unit processor executing the lowest priority task to execute an interrupt processing that was input. Thus, interrupt processing that occurred can be executed within the CPU 10 without, as far as possible, reducing the capacity to process tasks. Accordingly, interrupt processing can be efficiently processed within the CPU 10 as a multiprocessor.

## Description

The present invention relates to a processor that processes a plurality of tasks or threads parallelly and an information processing method thereof.

In recent years, processors referred to as "multitask processors" or "multithread processors" that are capable of processing a plurality of tasks or threads parallelly (hereunder, these are referred to by the generic term "multiprocessor") are being utilized in embedded devices and the like.

In the conventional portable devices, although processing has been performed by a single processor, processing is becoming more complicated accompanying the enhanced functionality of portable devices and processing using only a single processor is thus becoming difficult.

When carrying out processing with a multiprocessor, when interrupt processing occurs it is necessary to respond differently than in the case of a single processor. For example, a method can be considered in which one processor among a plurality of processors is previously designated to perform processing in accordance with the kind of interrupt or in which an interrupt signal is input to all of the plurality of processors and arbitration is then performed among the processors.

In this connection, technology relating to a method which arbitrates interrupt processing among processors in a multiprocessor is described in JP-A-6-324996 (hereunder, referred to as "Patent Document 1") and JP-A-10-97509 (hereunder, referred to as "Patent Document 2").

In the technologies described in Patent Documents 1 and 2, each processor in a multiprocessor system is equipped with an interrupt controller, and when an interrupt request occurs arbitration is carried out among these interrupt controllers.

However, in the technologies described in Patent Documents 1 and 2, in order to equip each processor with an interrupt controller it is necessary to increase the size of the required hardware and the wiring also becomes complicated, and thus the technology is not suitable for embedded devices.

Further, as described above, when one processor among a plurality of processors is previously designated to perform processing in accordance with the kind of interrupt, a situation can arise in which interrupt processing is not executed even though a processor may exist that is in a non-operating state, and thus it is possible that the processing efficiency may decline.

Therefore, according to the prior art including the technology disclosed in Patent Documents 1 and 2 it was difficult to efficiently process processing of a high priority (hereunder, referred to as "high priority processing") such as interrupt processing or the like in an environment with limited hardware resources such as a multiprocessor suitable for an embedded device.

An object of this invention is to efficiently process high priority processing in a multiprocessor.

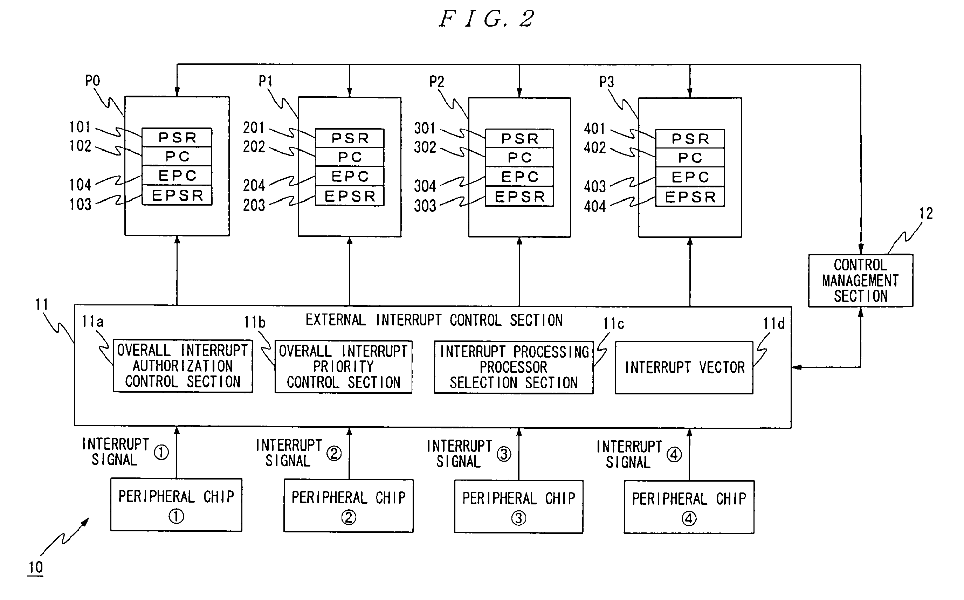

In order to solve the above described problems, according to this invention there is provided a processor comprising apluralityofprocessorsections (forexample, unitprocessors PO to P3 of FIG. 2) that process a task or a thread, and a high priority processing control section (for example, an external interrupt control section 11 of FIG. 2) that controls execution of high priority processing (for example, interrupt processing) that was input, wherein the high priority processing control section causes a processor section that is not executing processing of a task or a thread or a processor section that is executing processing of a task or a thread of the lowest priority among the plurality of processor sections to execute the high priority processing that was input.

According to this type of configuration, it is possible to cause a processor section that is not executing a task or a thread or a processor section that is executing a task or a thread of the lowest priority to execute high priority processing such as interrupt processing that was input.

Accordingly, since high priority processing can be executed without, as far as possible, reducing the capacity to process tasks or threads, it is possible to efficiently process high priority processing in a multiprocessor.

Another feature of the processor is that the high priority processing control section includes a processor selection section (for example, an interrupt processing processor selection section 11c of FIG. 2) that stores an information showing the processor section among the plurality of processor sections to be caused to execute a high priority processing that is input next, wherein each time switching of a task or a thread takes place in the plurality of processor sections the high priority processing control section determines a processor section that is not executing processing of a task or a thread or the processor section executing processing of a task or a thread of the lowest priority and stores information indicating the processor section in the processor selection section.

According to this type of configuration, when high priority processing occurs it is possible to refer to the processor selection section and immediately execute the high priority processing at the predetermined processor section, thus enabling the high priority processing to be processed efficiently.

A further feature of the processor is that a priority level is set for the highpriorityprocessing, thehighpriority processing control section includes a priority level storage section (for example, an overall interrupt priority control section 11b of FIG. 2) that stores a priority level that was set for the high priority processing that is being executed, wherein the processor selects and executes the high priority processing that was input from among high priority processing that were input by taking the priority level stored in the priority level storage section as a reference.

According to this type of configuration, when a plurality of high priority processing occur it is possible to perform execution control appropriately among the plurality of high priority processing to enable efficient processing of interrupt processing.

A further feature of the processor is that the predetermined processing of a high priority is interrupt processing.

According to this type of configuration, it is possible to efficiently process interrupt processing in a multiprocessor.

According to this invention there is also provided an information processing method for a processor comprising a plurality of processor sections that process a task or a thread, wherein the method causes a processor section that is not executing processing of a task or a thread or a processor section that is executing processing of a task or a thread of the lowest priority among the plurality of processor sections to execute high priority processing that was input.

A feature of the information processing method is that each time switching of a task or a thread takes place in the plurality of processor sections, the method determines a processor section that is not executing processing of a task or a thread or the processor section executing processing of a task or thread of the lowest priority and stores an information indicating a processor section among the plurality of processor sections that will be caused to execute a high priority processing that is next input.

A further feature of the information processing method is that apriority level is set for the highpriorityprocessing, and the method stores a priority level that was set for the high priority processing that is being executed and selects and executes the high priority processing that was input from among high priority processing that were input by taking the stored priority level as a reference.

A further feature of the information processing method is that the predetermined processing of a high priority is interrupt processing.

Thus, according to this invention, it is possible to efficiently process high priority processing in a multiprocessor.

Embodiments of the present invention will now be described by way of further example only and with reference to the accompanying drawings, in which:
FIG. 1 is a block diagram showing the functional configuration of a mobile telephone 1 of this invention;
FIG. 2 is a block diagram showing the internal configuration of a CPU 10;
FIG. 3 is a flowchart illustrating interrupt processing processor specification processing;
FIG. 4 is a flowchart illustrating interrupt execution processing; and
FIG. 5 is a view showing a configuration example of a multiprocessor as an application object of this invention.

Hereunder, embodiments of the processor according to this invention are described referring to the drawings.

The processor according to this invention is a device that processes a program in a parallel manner using the executable units thereof, such as tasks or threads. The processor according to this invention includes therein a hardware configuration which substantially comprises a plurality of processors (hereunder, referred to as "unit processor") that execute tasks and the like.

Further, by comprising an external interrupt control section that appropriately selects a unit processor among the plurality of unit processors to execute high priority processing (interrupt processing and the like), it is possible to efficiently execute high priority processing.

First, the configuration of the processor is described.

In this case, an example is described in which the processor of this invention is incorporated into a mobile telephone and interrupt processing is taken as the high priority processing. In the following description, executable units of a program such as threads and the like are referred to generically as "tasks".

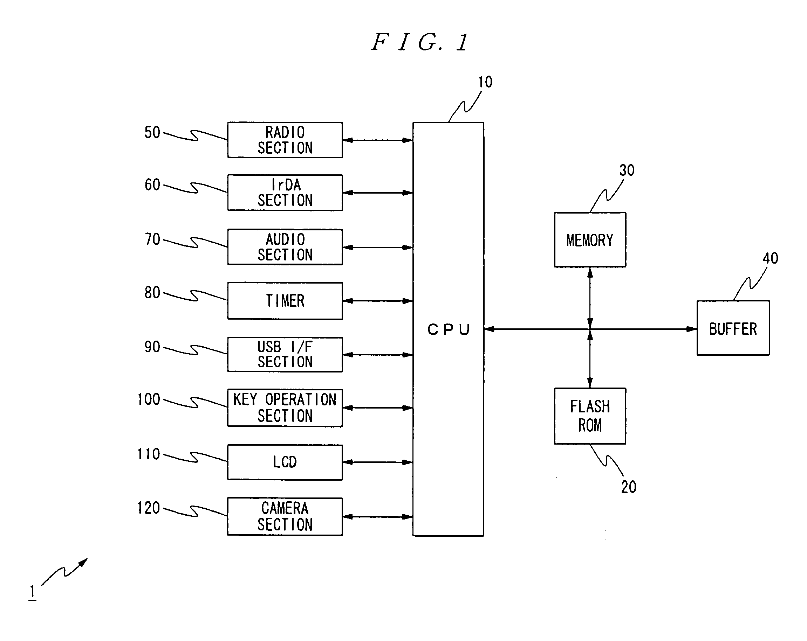

FIG. 1 is a block diagram showing the functional configuration of a mobile telephone 1 of this invention.

In FIG. 1, a mobile telephone 1 consists of a CPU (Central Processing Unit) 10, a flash ROM 20, a memory 30, a buffer 40, a radio section 50, an IrDA (Infrared Data Association) section 60, an audio section 70, a timer 80, a USB (Universal Serial Bus) interface section 90, a key operation section 100, a LCD (Liquid Crystal Display) 110 and a camera section 120. The CPU 10, the flash ROM 20, the memory 30 and the buffer 40 are connected by a bus. The radio section 50, the IrDA section 60, the audio section 70, the timer 80, the USB interface section 90, the key operation section 100, the LCD 110 and the camera section 120 are directly connected to the CPU 10.

The CPU 10 is a device that controls the overall operation of the mobile telephone 1 while processing a plurality of tasks parallelly. The CPU 10 reads out and executes an operating system program (OS) or various application programs that were stored in the flash ROM 20 in accordance with various instruction signals input from the key operation section 100, or the CPU 10 executes an interrupt handler in accordance with an interrupt signal input from a peripheral chip of the radio section 50, the audio section 70, the camera section 120 or the like.

For example, the CPU 10 processes parallelly a task generated by the operating system and a task generated by an application. Further, when an interrupt signal is input from a peripheral chip the CPU 10 executes an interrupt handler to start the application corresponding to the interrupt signal. In this connection, since processing by an application is executed as a task that is managed by the task scheduler of the operating system, it is possible to invoke an operating system service call for that processing, and conversely, since interrupt processing that is not managed by the task scheduler (non-task processing), it is not possible to invoke an operating system service call for interrupt processing.

The CPU 10 also stores various processing results in the flash ROM 20 or the memory 30.

Next, the internal configuration of the CPU 10 is described.

FIG. 2 is a block diagram showing the internal configuration of the CPU 10.

In FIG. 2, the CPU 10 consists of a plurality of unit processors P0 to P3, an external interrupt control section 11 and a control management section 12. In this connection, the term "peripheral chip" indicated in FIG. 2 is a generic term for functional sections that are directly connected to the CPU 10 shown in FIG. 1, such as the radio section 50, the IrDA section 60 and the audio section 70, and this term implies that the respective peripheral chips denote any one of these functional sections.

The unit processors P0 to P3 are processors that are capable of processing respective tasks in a parallel manner. When an interrupt signal occurs in a peripheral chip, interrupt processing is executed by a processor selected by the external interrupt control section 11 that is described later.

In this connection, since the unit processors P0 to P3 have the same internal configuration, the internal configuration of the unit processor P0 will be described as a representative thereof.

The unit processor P0 consists of a status register (PSR) 101, a program counter (PC) 102, an interrupt processing status register (EPSR) 103 and an interrupt processing program counter (EPC) 104.

Although a diagrammatic representation is omitted here, the unit processor P0 also includes a fetch section that reads out an instruction code from a memory address indicated by a program counter, a decoding section that decodes an instruction code that was input by the fetch section, and a register file that stores data of anALU (Arithmetic and Logical Unit) that performs a predetermined operation, an operand or an operation result in accordance with a decoding result in the decoding section and the like.

The status register 101 stores the status of the unit processor P0 (for example, status indicating whether or not interrupt is enabled or the overflow occurrence status in the unit processor P0 or the like).

The program counter 102 stores the memory address in which an instruction to be executed next by the unit processor P0 is stored.

In this connection, the contents stored in the status register 101 and the program counter 102 are saved in the interrupt processing status register 103 and the interrupt processing program counter 104 when interrupt processing is executed in the unit processor P0.

The interrupt processing status register 103 is a register that saves (duplicates) the state of the status register 101 immediately prior to starting an interrupt processing program when interrupt processing is executed in the unit processor P0. For an interrupt processing program, it is also possible to save the contents of the interrupt processing status register 103 in a stack area as necessary.

The interrupt processing program counter 104 is a register that saves (duplicates) an address of the program counter 102 immediately prior to starting an interrupt processing program when interrupt processing is executed in the unit processor P0. For an interrupt processing program, it is also possible to save the contents of the interrupt processing program counter 104 in a stack area as necessary.

When an interrupt signal was input from a peripheral chip such as the radio section 50, after conducting arbitration for the interrupt signal, the external interrupt control section 11 selects a processor to execute the interrupt processing, and when the unit processor P0 was selected the external interrupt control section 11 outputs a predetermined interrupt signal to the unit processor P0.

More specifically, the external interrupt control section 11 consists of an overall interrupt authorization control section 11a, an overall interrupt priority control section 11b, an interrupt processing processor selection section 11c and an interrupt vector 11d.

The overall interrupt authorization control section 11a stores interrupt authorization flags that indicate whether or not execution of various kinds of interrupt processing is authorized by the CPU 10. When an interrupt signal is input from a peripheral chip, the overall interrupt authorization control section 11a accepts that interrupt processing if an interrupt authorization flag corresponding to that interrupt indicates a state authorizing an interrupt, and if the interrupt authorization flag corresponding to that interrupt indicates a state that does not authorize an interrupt the overall interrupt authorization control section 11a places that interrupt processing in a standby state.

The overall interrupt priority control section 11b stores the priority (reference value) of an interrupt processing accepted by the CPU 10. For interrupt processing input to the CPU 10, a priority level is set dynamically when the interrupt processing occurs or, alternatively, the priority level is previously set in a fixed manner. The overall interrupt priority control section 11b stores the priority level of the interrupt processing that is currently being executed by the CPU 10. The overall interrupt priority control section 11b refers to the priority of an interrupt signal that was input from a peripheral chip and compares the stored priority (reference value) of the interrupt processing with the priority of the interrupt signal that was input from the peripheral chip. When the overall interrupt priority control section 11b determines as a result that the priority of the interrupt signal that was input from the peripheral chip is lower than the currently stored priority (reference value), it places the interrupt processing from the peripheral chip in a standby state. In contrast, when the overall interrupt priority control section 11b determines that the priority of the interrupt signal input from the peripheral chip is higher than the currently stored priority (reference value) it gives priority to the new interrupt processing and thus executes that interrupt processing.

The interrupt processing processor selection section 11c consists of a register including a unit processor specification area that shows which of the unit processors P0 to P3 will be made to execute the next interrupt processing, and an interrupt enable area that shows whether or not to cause the unit processor shown in the unit processor specification area to perform interrupt processing.

The unit processor specification area is updated by interrupt processing processor specification processing (described later) that is executed each time dispatching (reallocation of the unit processors P0 to P3 accompanying task switching) takes place in the CPU 10. In this connection, the interrupt enable area is rewritten in accordance with whether or not to accept interrupt processing for the entire CPU 10.

The interrupt vector 11d stores a memory address of a table in which is stored a list of interrupt handlers. When interrupt processing is executed, the unit processor performing the processing first refers to the address on the memory 30 that is stored in the interrupt vector and then jumps to the storage destination of an interrupt handler that corresponds to the kind of interrupt, which is shown in the table. Thereafter, the unit processor carries out the interrupt processing by activating the interrupt handler.

A control management section 12 is implemented in co-operation with an operating system program that was expanded on the memory 30 and, for example, it includes a function that updates the unit processor specification area of the interrupt processing processor selection section 11c by executing interrupt processing processor specification processing as one function of the operating system and a function that performs management of the operating states of the unit processors P0 to P3 (whether in a halt state or operating) as well as the priorities of tasks being executed by the unit processors P0 to P3 that are operating. In this connection, the unit processor that executes processing as an operating system varies as the need arises according to the circumstances.

Returning to FIG. 1, the flash ROM 20 stores various application programs and the operating system program executed in the mobile telephone 1.

The memory 30 consists of a semiconductor memory such as a DRAM (Dynamic Random Access Memory), SRAM (Static Random Access Memory) or a SDRAM (Synchronous DRAM), and forms a work area that is used when the CPU 10 executes processing and also stores the processing results.

The buffer 40 is a buffer that temporarily holds data input into the mobile telephone 1 from outside or data that was generated within the mobile telephone 1.

The radio section 50 is a device that conducts radio communication between the mobile telephone 1 and a base station of a mobile telephone system. For example, when the radio section 50 receives a signal indicating an incoming call for the mobile telephone 1 from a base station, it outputs an interrupt signal to the CPU 10 to notify the CPU 10 of reception of the incoming call signal. Further, when a signal designating an outgoing transmission is input to the radio section 50 from the CPU 10, the radio section 50 sends a signal indicating a transmission request to a base station.

The IrDA section 60 is an interface that performs communication that is based on IrDA. When the IrDA section 60 receives a radio signal that is based on IrDA from outside, it outputs an interrupt signal to the CPU 10 to notify the CPU 10 of reception of an IrDA signal.

The audio section 70 is a device that processes audio signals that are input to or output from the mobile telephone 1. The audio section 70 performs processing such as inputting or outputting speech of a telephone conversation using a microphone and speaker, or playing back music or the like.

The timer 80 measures time based on a clock signal of the mobile telephone 1 and outputs an interrupt signal to the CPU 10 at intervals of a predetermined time, for example, every 1 ms.

The USB interface section 90 is an interface for performing communication by means of a USB. When a USB cable is connected to the USB interface section 90 or when the USB interface section 90 receives a signal from a USB cable, it outputs an interrupt signal to the CPU 10.

The key operation section 100 is equipped with various keys for inputting instructions to the mobile telephone 1, and when these keys are pressed the key operation section 100 outputs an interrupt signal to the CPU 10.

The LCD 110 is a display device that displays a predetermined screen in accordance with a rendering instruction for characters or an image or the like that was input by the CPU 10.

The camera section 120 is equipped with an image pickup device such as a CCD (Charge Coupled Device) or CMOS (Complementary Metal Oxide Semiconductor) sensor or the like. When the camera section 120 images an image, it outputs an interrupt signal to the CPU 10.

Next, the operation of the mobile telephone 1 is described.

First, interrupt processing processor specification processing will be described.

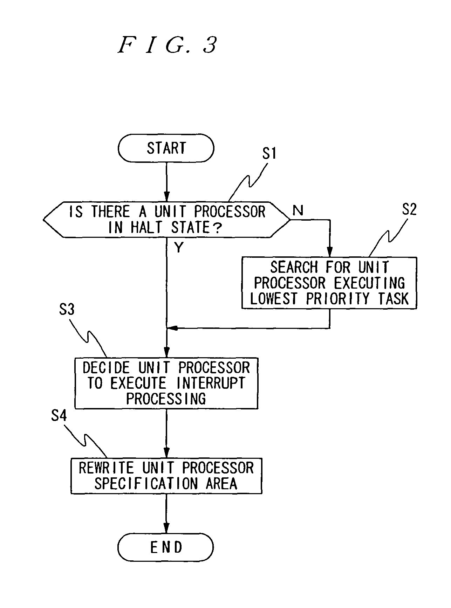

FIG. 3 is a flowchart illustrating interrupt processing processor specification processing.

Interrupt processing processorspecification processing is executed by a unit processor (here, it is taken as the unit processor P0) that executes the operating system each time dispatching takes place in the CPU 10.

In FIG. 3, when dispatching takes place in the CPU 10, the unit processor P0 that is executing the operating system searches to see whether or not there is a unit processor in a halt state (step S1). When the unit processor P0 decides that there is no unit processor in a halt state, it searches for the unit processor that is executing the lowest priority task (step S2).

When the unit processor P0 determines that there is a unit processor in a halt state in step S1, and also after step S2, the unit processor P0 decides that the unit processor in a halt state or the unit processor executing the lowest priority task will be the unit processor to execute the next interrupt processing that occurs (step S3).

Next, the unit processor P0 rewrites the unit processor specification area in the interrupt processing processor selection section 11c to a value showing the unit processor that was decided in step S3 (step S4).

The unit processor P0 then ends the interrupt processing processor specification processing.

As the result of this processing, when interrupt processing occurs, the interrupt processing can be executed immediately by referring to the unit processor specification area in the interrupt processing processor selection section 11c, without having to perform selection of a unit processor each time that interrupt processing occurs.

Next, the interrupt execution processing that is executed by the unit processor P0 that executes the operating system and the external interrupt control section 11 when interrupt processing occurs will be described.

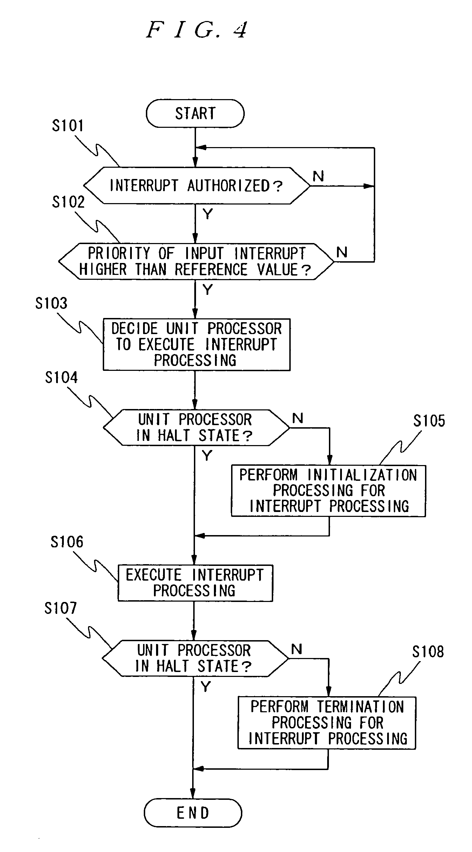

FIG. 4 is a flowchart illustrating interrupt execution processing. Interrupt execution processing starts when an interrupt signal is input from a peripheral chip such as the radio section 50.

In FIG. 4, when an interrupt signal is input from a peripheral chip, the overall interrupt authorization control section 11a refers to a stored interrupt authorization flag to determine whether or not execution of the input interrupt signal is authorized (step S101).

In step S101, when the overall interrupt authorization control section 11a determines that execution of the input interrupt signal is not authorized, the processing returns to step S101.

In contrast, when the overall interrupt authorization control section 11a determines in step S101 that execution of the input interrupt signal is authorized, the overall interrupt priority control section 11b compares the priority of the input interrupt signal with the stored priority (reference value) to determine whether or not the priority of the input interrupt signal is higher than the stored priority (reference value) (step S102).

When the overall interrupt priority control section 11b determines in step S102 that the priority of the input interrupt signal is lower than the stored priority (reference value), the processing returns to step S101.

In contrast, when the overall interrupt priority control section 11b determines in step S102 that the priority of the input interrupt signal is higher than the stored priority (reference value), the unit processor P0 that is executing the operating system refers to the unit processor specification area in the interrupt processing processor selection section 11c to select the unit processor to cause to execute the interrupt processing (step S103).

The unit processor P0 then determines whether or not the unit processor that was selected in step S103 to execute interrupt processing is in a halt state (step S104). When it determines that the unit processor is not in a halt state, the unit processor P0 causes the unit processor selected to execute the interrupt processing to perform initialization processing (duplication of PSR and PC values to the EPC and EPSR and saving of context) for interrupt processing (step S105).

When the unit processor P0 determined in step S104 that the unit processor selected to execute the interrupt processing is in a halt state, and also after step S105, the unit processor executing the interrupt processing refers to the interrupt vector to activate an interrupt handler to thereby execute the interrupt processing (step S106).

Next, the unit processor P0 determines whether or not the unit processor that it caused to execute the interrupt processing is a unit processor that was in a halt state (step S107), and when it determines that the processor was not in a halt state it causes the unit processor to perform processing to terminate the interrupt processing (processing to return the EPC and EPSR values to the PC and PSR and to return the context) (step S108).

When the unit processor P0 determines in step S107 that the unit processor that it caused to execute the interrupt processing is a unit processor that was in a halt state, and also after step S108, it ends the interrupt execution processing.

As the result of this processing, whenan interrupt occurs, the interrupt processing is executed immediately by selecting the unit processor among the unit processors P0 to P3 that is the most suitable to perform the interrupt processing.

As described in the foregoing, the mobile telephone 1 of this embodiment comprises within the CPU 10 the external interrupt control section 11 that causes a unit processor that is not executing a task or the unit processor executing the lowest priority task to execute the input interrupt processing.

Thus, interrupt processing that occurred can be executed in the CPU 10 without, as far as possible, reducing the capacity to process tasks.

Accordingly, interrupt processing can be efficiently processed in the CPU 10 as a multiprocessor.

Further, the overall interrupt priority control section 11b stores the priority level of the interrupt processing currently being processed as a reference value, and with respect to interrupt processing input thereafter, interrupt processing with a priority that is higher than the reference valuepriority stored in the overall interrupt priority control section 11b is selected and executed.

When a plurality of interrupt processing occur, execution control can be performed appropriately among the plurality of interrupt processing to thus enable interrupt processing to be efficiently processed in the CPU 10.

In this connection, although this invention can be applied to processors of various implementation configurations referred to asmultithread processorsor multitask processors, for example, the invention is particularly effective in a type of multiprocessor in which a plurality of processor cores are mounted on one chip and at least one part of the components of the processor is shared by these plurality of processor cores (a so-called tightly coupled multitask processor).

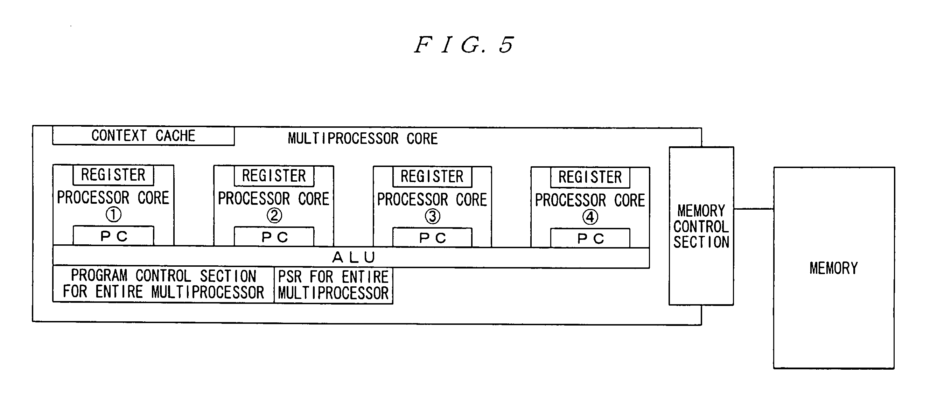

FIG. 5 is a view showing a configuration example of a multiprocessor as an application object of this invention.

The multiprocessor shown in FIG. 5 has a configuration in which a plurality of processor cores share a memory control section and an ALU. Each of the processor cores comprises a program counter and a control register such as a status register. The multiprocessor also separately comprises a control register (PSR for entire multiprocessor) and a program control section (program control section for entire multiprocessor) for controlling the overall operations of the multiprocessor. In this connection, as shown in FIG. 5, the multiprocessor may also comprise a context cache or the like that is shared by the respective processor cores.

In a multiprocessor having this type of configuration, the respective processor cores realize the functions of the unit processors of the present embodiment, and the functions of the external interrupt control section of this embodiment are realized by a part of the PSR for the entire multiprocessor and the program control section for the entire multiprocessor.

The aforegoing description has been given by way of example only and it will be appreciated by a person skilled in the art that modifications can be made without departing from the scope of the present invention.

## Claims

1. A processor comprising a plurality of processor sections that process a task or a thread and a high priority processing control section that controls execution of a high priority processing that was input, wherein the highpriorityprocessing control section causes a processor section that is not executing processing of a task or a thread or a processor section that is executing processing of a task or a thread of the lowest priority among the plurality of processor sections to execute the high priority processing that was input.

2. The processor according to claim 1, wherein the high priority processing control section includes a processor selection section that stores an information showing the processor section among the plurality of processor sections to be caused to execute a high priority processing that is input next, and each time switching of a task or a thread takes place in the plurality of processor sections the high priority processing control section determines a processor section that is not executing processing of a task or a thread or the processor section that is executing processing of a task or a thread of the lowest priority and stores an information indicating the processor section in the processor selection section.

3. The processor according to claim 1 or 2, wherein a priority level is set for the highpriorityprocessing, the highpriority processing control section includes a priority level storage section that stores a priority level that was set for the high priority processing that is being executed, and the processor selects and executes the high priority processing that was input from among high priority processing that were input by taking the priority level stored in the priority level storage section as a reference.

4. The processor according to any one of claims 1 to 3, wherein the predetermined processing of a high priority is interrupt processing.

5. An information processing method for a processor comprising a plurality of processor sections that process a task or a thread, wherein the method causes a processor section that is not executing processing of a task or a thread or a processor section that is executing processing of a task or a thread of a lowest priority among the plurality of processor sections to execute a high priority processing that was input.

6. The information processing method according to claim 5, wherein each time switching of a task or thread takes place in the plurality of processor sections, the method determines a processor section that is not executing processing of a task or a thread or the processor section executing processing of a task or a thread of the lowest priority and stores an information indicating a processor section among the plurality of processor sections that will be caused to execute a high priority processing that is next input.

7. The information processing method according to claim 5 or 6, wherein a priority level is set for the high priority processing, and the method stores a priority level that was set for the high priority processing that is being executed and selects and executes the high priority processing that was input from among high priority processing that were input by taking the stored priority level as a reference.

8. The information processing method according to any one of claims 5 to 7, wherein the predetermined processing of a high priority is interrupt processing.
